# EUROPEAN PATENT APPLICATION

(11) **EP 3 767 104 A1**
(43) Date of publication of application: **20.01.2021**
(21) Application number: 20150769.6
(22) Date of filing: 08.01.2020
(51) Int. Cl.: F04B 17/04, F04B 53/10, F04B 53/14, F16J 1/00, F16K 15/00

(54) **A FLUID PUMP**

(30) Priority: 15.07.2019 HK 19126793
(71) Applicant: ODE (HK) Company Limited, Chai Wan (HK)
(72) Inventor: HO, Man Ting, Chai Wan (HK)
(74) Representative: FRKelly

(57) **Abstract**

A fluid pump including: a pump body having an inlet and an outlet, and a pump fluid chamber disposed between the inlet and outlet; a plunger configured for forcing fluid through the pump fluid chamber from the inlet towards the outlet; and at least one check valve including a spring-loaded stopper operably-connected with the pump body and configured for sealing engagement with a mating surface of the pump body so as to allow fluid flow in one direction through the pump fluid chamber from the inlet and exiting the outlet; wherein the spring-loaded stopper includes a spring-loaded stopper surface for effecting the sealing engagement with the mating surface of the pump body, said spring-loaded stopper surface being formed from at least one of a nitrile rubber and an ethylene propylene diene monomer rubber material, and, including a coating of parylene material disposed thereon.

## Description

### Technical Field

The present invention relates to a novel fluid pump and in particular a solenoid fluid pump comprising check valves to allow pumping of fluid in one direction.

### Background of the Invention

Fluid pumps, for instance, solenoid-type fluid pumps, are a form of positive displacement pump which may typically comprise a pump fluid chamber, a solenoid plunger assembly and check valves to displace fluid from an inlet suction line to an outlet discharge line of the pump. Operation of the check valves in the fluid pump ensure that pressurised water created by the movement of a solenoid plunger is suitably delivered in one direction from the inlet line to the outlet line.

In conventional fluid pumps, a check valve may include a check valve stopper formed from a rubber-type material to effect sealing with mating surfaces of the pump due to the elasticity of the material. However, such conventional check valve stoppers will tend to have voids and cavities disposed in the rubber surface which allows water to be trapped therein. Upon drying of the water in the voids and cavities, residual contaminants such as calcium and in the voids and cavities cause the stopper surface to stick to the mating surfaces, thus compromising the proper functioning of the check valves and of the fluid pump. In seeking to address this problem, check valve stoppers have been formed from other materials such as thermoplastics, however, thermoplastics tend to exhibit poorer sealing ability and may shrink in size when left to dry for long periods, and, may undergo undue expansion due to water absorption when in use . In both cases, these distortion in the stopper size of the check valves may also cause the fluid pump to malfunction.

### Summary of the Invention

The present invention seeks to alleviate at least one of the above-described problems.

The present invention may involve several broad forms. Embodiments of the present invention may include one or any combination of the different broad forms herein described.

In one broad form, the present invention provides a fluid pump including:
a pump body having an inlet and an outlet, and a pump fluid chamber disposed between the inlet and outlet;
a plunger configured for forcing fluid through the pump fluid chamber from the inlet towards the outlet; and
at least one check valve including a spring-loaded stopper operably-connected with the pump body and configured for sealing engagement with a mating surface of the pump body so as to allow fluid flow in one direction through the pump fluid chamber from the inlet and exiting the outlet;
wherein the spring-loaded stopper includes a spring-loaded stopper surface for effecting the sealing engagement with the mating surface of the pump body, said spring-loaded stopper surface being formed from at least one of a nitrile rubber and an ethylene propylene diene monomer rubber material, and, including a coating of parylene material disposed thereon.

Preferably, the present invention may include a solenoid fluid pump.

Preferably, the present invention may include at least two check vales to allow fluid flow in one direction through the pump fluid chamber from the inlet and exiting the outlet.

Preferably, the spring-loaded stopper surface for effecting sealing engagement with the mating surface of the pump body may include a portion of at least one of a dome-shaped and a mushroom-shaped stopper.

In another broad form, the present invention provides a check valve for use with a fluid pump, the fluid pump including a pump body having an inlet, an outlet, a pump fluid chamber disposed between the inlet and the outlet, and, a plunger configured for forcing fluid through the pump fluid chamber from the inlet towards the outlet, said check valve including;
at least one spring-loaded stopper operably-connected with the pump body and configured for sealing engagement with a mating surface of the pump body so as to allow fluid flow in one direction through the pump fluid chamber of the fluid pump from the inlet and exiting the outlet; and
wherein the spring-loaded stopper includes a spring-loaded stopper surface for effecting the sealing engagement with the mating surface of the pump body, said spring-loaded stopper surface being formed from at least one of a nitrile rubber and an ethylene propylene diene monomer rubber material, and, including a coating of parylene material disposed thereon.

Preferably, the present invention may include a solenoid fluid pump.

Preferably, the present invention may include at least two check vales to allow fluid flow in one direction through the fluid chamber from the inlet and exiting the outlet.

Preferably, the spring-loaded stopper surface for effecting sealing engagement with the mating surface of the pump body may include a portion of at least one of a dome-shaped and a mushroom-shaped stopper.

In another broad form, the present invention provides a plunger for use with a fluid pump, said plunger including an outer surface including a coating of parylene material disposed thereon.

### Brief Description of the Drawings

The present invention will become more fully understood from the following detailed description of a preferred but non-limiting embodiments thereof, described in connection with the accompanying drawings, wherein:
**Figure 1A** shows an aspect of a conventional fluid pump in which a check valve stopper is stuck to an outlet of the pump body due to contaminants in the fluid that have been deposited on the surface of the stopper;
**Figure 1B** shows another aspect of a conventional fluid pump wherein calcium and bacteria from unsterile water is disposed on a plunger of the fluid pump;
**Figure 1C** shows another aspect of a conventional fluid pump wherein bacteria growth from unsterile water is disposed on a surface of a plunger of the fluid pump;
**Figure 2A** shows an example dome-shaped stopper of a check valve for use in a solenoid fluid pump in accordance with an embodiment of the present invention;
**Figure 2B** shows a cut-away view of an aspect of a solenoid fluid pump in accordance with an embodiment of the present invention;
**Figure 3** shows a surface of a stopper of the check valve formed from a rubber material, in accordance with an embodiment of the present invention;
**Figure 4A** shows a surface of a stopper of the check valve formed from a nitrile rubber material before any parylene coating is applied, in accordance with an embodiment of the present invention;
**Figure 4B** shows a surface of a stopper of the check valve formed from a nitrile rubber material after a Parylene coating is applied thereon, in accordance with an embodiment of the present invention.
**Figure 5** shows a table of comparative performance scores in respect to different materials for use in the check valve;
**Figure 6** shows a table of comparative advantages and disadvantages of different methods to try and address problems associated with sticking of check valve stoppers in conventional type fluid pumps; and
**Figure 7** shows images of parylene-coated check valve stoppers as used in embodiments of the present invention wherein the top row of stoppers shown have been life-tested to 3,000 cycles whilst the bottom row of stoppers shown have been life-tested to 50,000 cycles.

### Detailed Description of the Preferred Embodiments

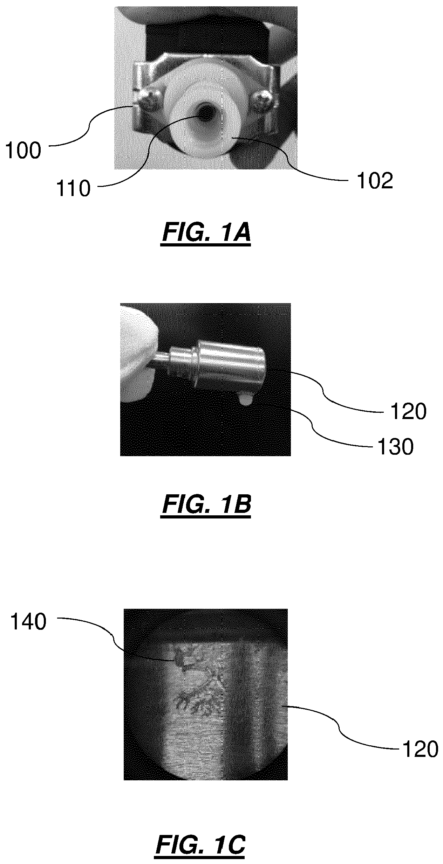

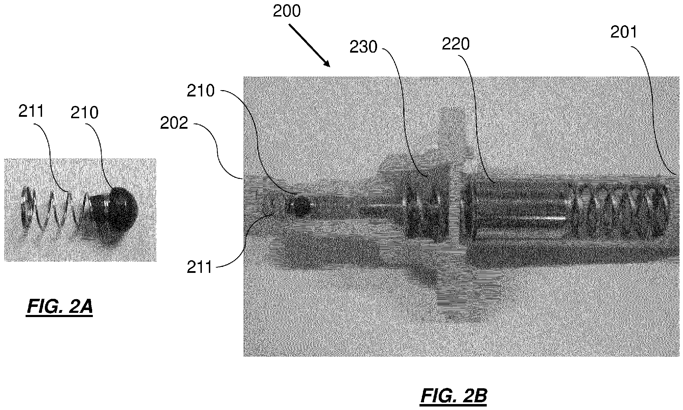

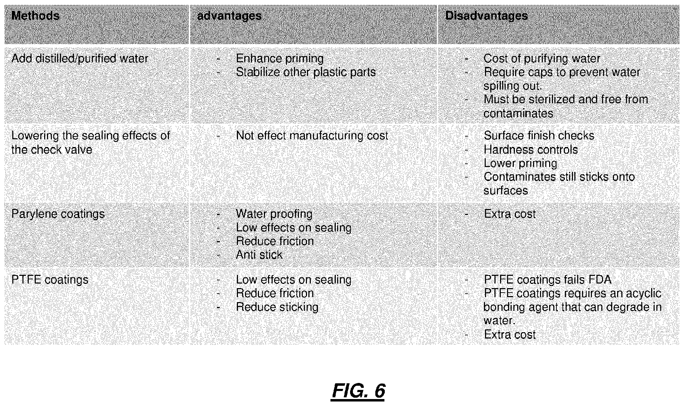

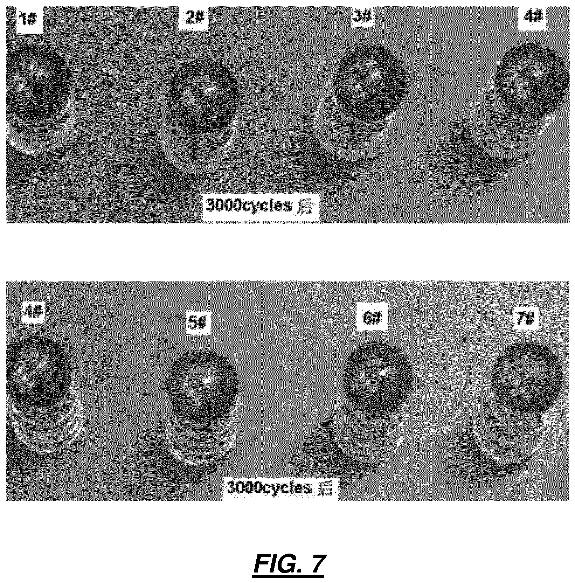

Preferred embodiments of the present invention will now be described herein with reference to Figs. 1A to 7. The embodiments comprise a novel check valve (210) for use in a fluid pump (200) as well as the fluid pump (200) itself comprising the novel check valve (210). It would be appreciated and understood that whilst the embodiments described herein are described in relation to a solenoid fluid pump, this is merely for illustrative purposes to demonstrate the functionality of embodiments of the present invention, and, in alternate embodiments of the present invention the novel check valve may be suitably adapted for use in other types of pump devices, whether solenoid driven or not.

A solenoid-type fluid pump is a form of positive displacement pump which may typically comprise a pump fluid chamber (230) within the body of the pump (200), a solenoid plunger assembly (220) and check valves (210) to displace fluid from an inlet suction line (201) to an outlet discharge line (202) via the pump fluid chamber (230) of the fluid pump (200).

The solenoid assembly (220) which drives the fluid pump (200) consists of an electromagnet, spring assembly and solenoid plunger (220), which is activated/deactivated with a series of electrical impulses. As the solenoid assembly (220) is activated, the electromagnet pushes the solenoid plunger (220), which displaces the fluid entering via the inlet suction line (201) to an outlet discharge line (202). As the solenoid is deactivated, the spring mechanism returns the solenoid plunger (220) to its default position, allowing more fluid from an inlet suction line (201) to enter the pump fluid chamber (230) ready for delivery to the outlet discharge line (202).

Two check valves (210) are used in the fluid pump (200) and each include spring-loaded check valve stoppers (210) having stopper surfaces that are each configured for effecting sealing engagement with respective mating surfaces proximate to the inlet (201) and outlet (202) of the pump body (200) during operation of the fluid pump (200). Each of the stoppers in this embodiment are mushroom-shaped having a mushroom head and a stem portion integrally formed from the mushroom head. The stems are received within the coil of springs (211) that bias each of the stoppers. In other embodiments, the stoppers may instead be dome-shaped. Operation of the check valves (210) in the fluid pump (200) ensure that pressurised water created by the movement of a solenoid plunger (220) is suitably delivered in one direction from the inlet suction line (201) to the outlet discharge line (202) via the fluid pump chamber (230).

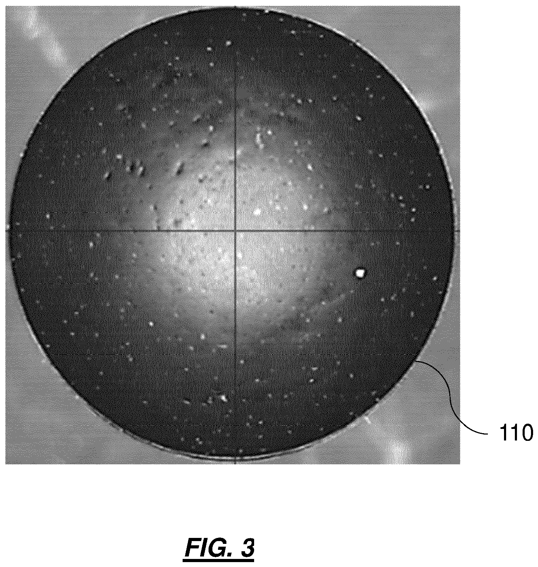

In certain conventional fluid pumps, the check valve stoppers will tend to stick to the mating surfaces within the fluid pump body. Figure 1A depicts an example of a conventional type fluid pump (100) in which the check valve stopper (110) has stuck to the mating surface proximate the outlet (102) of the pump resulting in malfunction of the fluid pump (100). Figures 1B and 1C depict bateria (140) and calcium (130) residue respectively from unsterile water that have been deposited on the solenoid plunger (120) surface, which is similar to contaminants that are also deposited in the voids and cavities of the conventional rubber surface of the pump's check valve stoppers (110), resulting in the stoppers sticking to their respective mating surfaces. Figure 3 shows an example of a conventional check valve stopper surface in which the multitude of voids and cavities are visible on the stopper surface in which water may be absorbed resulting in calcium and bacteria residue deposits when the water dries.

In embodiments of the present invention, each of the check valve stoppers (210) that are used in the check valve stoppers include surfaces configured for effecting sealing engagement with the respective mating surfaces proximate the inlet (201) and outlet (202) of the fluid pump body.

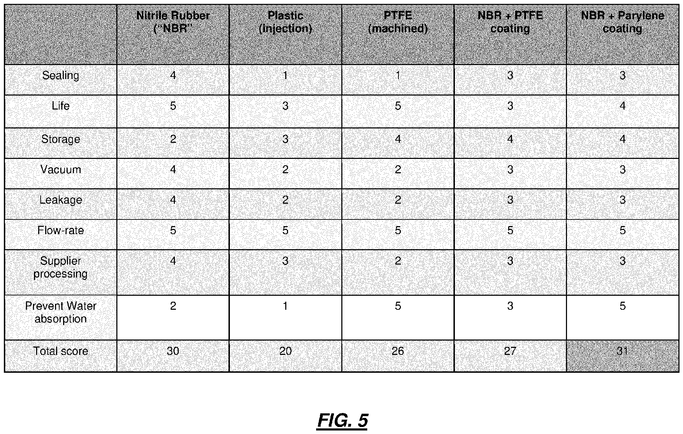

In this embodiment, the engagement surfaces of the stoppers are each formed from nitrile rubber ("NBR") material. The novel use of an NBR rubber stopper assists in alleviating problems associated with conventional check valves as described above due to its superior sealing ability compared to conventional materials used in conventional check valve stoppers. Accordingly, the vacuum and leakage performance of the solenoid pump using the novel check valves of these embodiments have been tested and rated more highly than compared to testing of conventional materials such as plastic of PTFE for instance. Figure 5 provides a more detailed summary of the comparative test performance of check valves formed from NBR rubber compared to check valves formed from conventional materials. Notably, the tests of check valves formed from NBR rubber produced a score of 30 relative to other tested check valves formed from conventional materials. In alternate embodiments of the present invention, the engagements surfaces of the stoppers could be formed instead from ethylene propylene diene monomer rubber ("EPDM") which exhibits similar advantages over conventional materials.

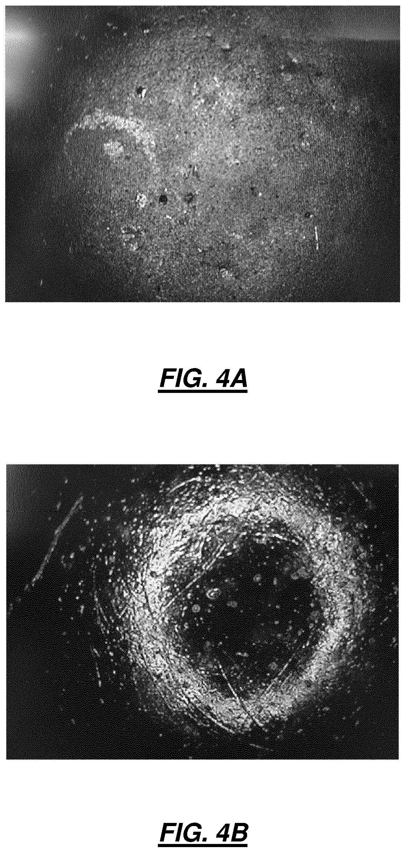

Notwithstanding the advantages associated with the novel use of NBR rubber as the check valve stopper material, the additional novel use of a parylene coating upon the NBR rubber material, has also surprisingly been found to further enhance performance of the check valve. In particular, the parylene coating over the NBR rubber surface in these embodiments has been found to provide numerous functional advantages including water-proofing which alleviates problems with water penetrating voids and cavities in the NBR surface and thus assists in stabilising the operation of the check valve in dry or wet environments. Further, the parylene coating is chemically-resistant with good barrier properties for inorganic and organic media, strong acids, caustic solutions, gases and water vapour. The parylene coating has further been found to have relatively low adverse effect upon the ability of the stopper to effect sealing with its mating surface. Yet further, the presence of the parylene coating includes a relatively low coefficient of friction and exhibits anti-stick properties so as not to adversely impact upon sealing engagement of the stopper. Yet further, the parylene coating is a biostable, biocompatible coating which has received FDA approval for various applications and thus is more readily adaptable for use in relation to fluid pump applications compared to other materials coatings such as PTFE and the like. Yet further, the parylene coating is a completely homogenous surface that exhibits relatively small amount of moisture absorption (i.e. less than 0.1% after 24 hours) and is a relatively dense pinhole free surface with thickness above 1.4mm. Figure 4A shows the novel check valve stopper formed from NBR rubber before the parylene coating has been applied to it at a magnification of 45X, and, Fig. 4B shows the novel check valve stopper formed form NBR rubber after the parylene coating has been applied to it at a magnification of 45X which exhibits a glossy finish.

Yet further, it has been found that the addition of the parylene coating to the NBR rubber stopper surface has exhibited relatively high resistance to degradation and wear during life-testing compared to other conventional materials. For instance, referring to Fig, 7, it can be seen that the glossy coating of parylene on the stoppers in the top row exhibit no signs of degradation after having been subjected to life-tested at 3,000 and cycles in the bottom row of stoppers still exhibit not signs of degradation after having been subjected to life-testing at 50,000 cycles.

To date, there has been no motivation for persons skilled in the art to even consider using parylene coatings on check valve stopper surfaces (let alone in combination with NBR rubber or EPDM rubber materials) in the context of fluid pump applications due to the relatively higher costs, complexity and manufacturing time involved in applying the parylene coating. In particular, there has been no need or motivation to consider coating parylene upon the stopper of the check valves as the relatively low cost of the fluid pump and it's component parts has meant that it has been more expedient to simply replace a faulty check valve with another check valve when a fault occurs rather than incur the additional time, cost and complexity in the manufacturing process to include the parylene coating.

Those skilled in the art will appreciate that the invention described herein is susceptible to variations and modifications other than those specifically described without departing from the scope of the invention. All such variations and modification which become apparent to persons skilled in the art, should be considered to fall within the spirit and scope of the invention as broadly hereinbefore described. It is to be understood that the invention includes all such variations and modifications. The invention also includes all of the steps and features, referred or indicated in the specification, individually or collectively, and any and all combinations of any two or more of said steps or features.

The reference to any prior art in this specification is not, and should not be taken as, an acknowledgment or any form of suggestion that that prior art forms part of the common general knowledge.

## Claims

1. A fluid pump including:
a pump body having an inlet and an outlet, and a pump fluid chamber disposed between the inlet and outlet;
a plunger configured for forcing fluid through the pump fluid chamber from the inlet towards the outlet; and
at least one check valve including a spring-loaded stopper operably-connected with the pump body and configured for sealing engagement with a mating surface of the pump body so as to allow fluid flow in one direction through the pump fluid chamber from the inlet and exiting the outlet;
wherein the spring-loaded stopper includes a spring-loaded stopper surface for effecting the sealing engagement with the mating surface of the pump body, said spring-loaded stopper surface being formed from at least one of a nitrile rubber and an ethylene propylene diene monomer rubber material, and, including a coating of parylene material disposed thereon.

2. A fluid pump as claimed in claim 1 including a solenoid fluid pump.

3. A fluid pump as claimed in claims 1 or 2 including at least two check vales to allow fluid flow in one direction through the pump fluid chamber from the inlet and exiting the outlet.

4. A fluid pump as claimed in any one of the preceding claims wherein the spring-loaded stopper surface for effecting sealing engagement with the mating surface of the pump body includes a portion of at least one of a dome-shaped and a mushroom-shaped stopper.

5. A check valve for use with a fluid pump, the fluid pump including a pump body having an inlet, an outlet, a pump fluid chamber disposed between the inlet and the outlet, and, a plunger configured for forcing fluid through the pump fluid chamber from the inlet towards the outlet, said check valve including;
at least one spring-loaded stopper operably-connected with the pump body and configured for sealing engagement with a mating surface of the pump body so as to allow fluid flow in one direction through the pump fluid chamber of the fluid pump from the inlet and exiting the outlet; and
wherein the spring-loaded stopper includes a spring-loaded stopper surface for effecting the sealing engagement with the mating surface of the pump body, said spring-loaded stopper surface being formed from at least one of a nitrile rubber and an ethylene propylene diene monomer rubber material, and, including a coating of parylene material disposed thereon.

6. A check valve as claimed in claim 5 wherein the fluid pump includes a solenoid fluid pump.

7. A check valve as claimed in claims 5 or 6 including at least two check vales to allow fluid flow in one direction through the pump fluid chamber from the inlet and exiting the outlet.

8. A check valve as claimed in any one of claims 6 or 7 wherein the spring-loaded stopper surface for effecting sealing engagement with the mating surface of the pump body includes a portion of at least one of a dome-shaped and a mushroom-shaped stopper.

9. A plunger for use with a fluid pump, said plunger including an outer surface including a coating of parylene material disposed thereon.
